# EUROPÄISCHE PATENTSCHRIFT

(11) **EP 1 202 895 B1**
(45) Veröffentlichungstag und Bekanntmachung des Hinweises auf die Patenterteilung: **26.01.2005**
(21) Anmeldenummer: 00951447.2
(22) Anmeldetag: 26.07.2000
(51) Int. Cl.: B61L 3/00

(54) **VERFAHREN ZUR ENERGIEOPTIMIERUNG BEI EINEM FAHRZEUG/ZUG MIT MEHREREN ANTRIEBSANLAGEN**
METHOD FOR OPTIMIZING ENERGY IN A VEHICLE/TRAIN WITH MULTPLE DRIVE UNITS
PROCEDE POUR OPTIMISER LA CONSOMMATION D'ENERGIE D'UN VEHICULE/TRAIN COMPORTANT PLUSIEURS UNITES D'ENTRAINEMENT

(30) Priorität: 29.07.1999 DE 19935353
(43) Veröffentlichungstag der Anmeldung: 08.05.2002
(73) Patentinhaber: Bombardier Transportation GmbH, 13627 Berlin (DE)
(72) Erfinder: FRANKE, Rüdiger, D-69121 Heidelberg (DE); TERWIESCH, Peter, CH-5512 Wohlenschwiel (CH); MEYER, Markus, CH-6030 Ebikon (CH); KLOSE, Christian, D-14774 Brandenburg (DE); KETTELER, Karl-Hermann, CH-5314 Kleindöltingen (CH)
(74) Vertreter: Akers, Noel James
(86) Internationale Anmeldenummer: PCT/EP2000/007151
(87) Internationale Veröffentlichungsnummer: WO 2001/008958

(56) Entgegenhaltungen:
- DD-A- 129 761
- DD-A- 208 324
- DD-A- 236 705
- DD-A- 262 836
- DD-A- 266 539

## Beschreibung

Die Erfindung bezieht sich auf ein Verfahren zur Energieoptimierung bei einem Fahrzeug/Zug gemäß dem Oberbegriff des Anspruches 1.

Bei der Planung von Fahrten und der Erstellung von Fahrplänen für den Schienenverkehr werden Zeitreserven für unvorhergesehene Ereignisse und widrige Betriebsbedingungen eingeplant. Da während realer Fahrten die Betriebsbedingungen typischerweise günstiger sind als in der Planung angenommen, werden die dabei entstehenden Zeitreserven für andere Zwecke verfügbar. Eine besonders sinnvolle Benutzung der Zeitreserven besteht in der Einsparung von Energie mittels geeigneter Fahrweise.

Bisher bekannte und verwendete Verfahren zur Energieminimierung basieren meist auf der Annahme, daß eine Fahrweise, bestehend aus den Bestandteilen Maximalbeschleunigung - Fahrt bei konstanter Geschwindigkeit - Ausrollen - Maximalverzögerung energieoptimal ist. Hierbei wird die mechanische Traktionsenergie, die zur Beschleunigung des Fahrzeuges benötigt wird, minimiert. Für Nachweise wird ein lineares dynamisches Zugmodell verwendet, insbesondere wird kein Term berücksichtigt, der den quadratischen Zusammenhang zwischen Geschwindigkeit und Fahrwiderstand beschreibt.

Bei der DD 255 132 A1 wird diese Grundannahme um die Unterteilung einer Gesamtstrecke in mehrere Abschnitte erweitert, so daß in jedem Abschnitt der Neigungswiderstand der Strecke konstant ist.

Bei der EP 0 467 377 B1 wird eine Unterteilung der Gesamtstrecke in mehrere Abschnitte in der Art eingeführt, daß in jedem Abschnitt die zulässige Maximalgeschwindigkeit konstant ist. Die aus den Bestandteilen Maximalbeschleunigung - Fahrt bei konstanter Geschwindigkeit - Maximalverzögerung bestehende Fahrweise wird in jedem Abschnitt wiederholt.

Es wird also auf das Ausrollen verzichtet.

Bei der EP 0755 840 A1 wird kein konkretes Verfahren zur Energieoptimierung beschrieben, sondern vielmehr eine generelle Systemstruktur erläutert, womit auch eine Energieoptimierung realisiert werden kann. Ein Zyklus, bestehend aus Beschleunigung - Fahrt bei konstanter Geschwindigkeit - Verlangsamung und Bremsung wird als Beispiel angeführt.

Bei der DD 266 539 A wird eine energieoptimale Steuerung beschrieben durch die zeitliche Abfolge der Bewegungsphasen Anfahrt mit maximaler Zugkraft, Beharrungsfahrt, Auslauf, Bremsen mit maximal zulässiger Bremskraft und die Angabe der vom Wirkungsgrad der Antriebsphase und vom Wirkungsgrad der Energierückspeisung abhängigen Größen Beharrungsgeschwindigkeit, Beharrungslänge und Bremszeitpunkt.

Der Erfindung liegt die Aufgabezugrunde, ein verbessertes Verfahren zur Energieoptimierung hinsichtlich der bei einem Fahrplan eines Fahrzeugs/Zuges eingeplanten Zeitreserven anzugeben.

Diese Aufgabe wird in Verbindung mit dem Oberbegriff durch die im Anspruch 1 angegebenen Merkmale gelöst.

Der mit der Erfindung erzielbare Vorteil besteht insbesondere darin, dass durch die Berücksichtigung der Verteilung der Antriebsausrüstung und der Mehrfachtraktion beim Optimierungsalgorithmus anstatt der mechanischen Traktionsenergie die primär eingesetzte Energie, wie z. B. die elektrische Energie bei elektrischen Schienenfahrzeugen, minimiert wird.

Weitere Vorteile des vorgeschlagenen Verfahrens ergeben sich aus der nachstehenden Beschreibung.

Die Erfindung wird nachstehend anhand des in den Zeichnungen dargestellten Ausführungsbeispiele näher erläutert. Es zeigen :
- Fig. 1: Kennfeld der Verlustleistung einer typischen elektrischen Lokomotive
- Fig. 2: Kennfeld der Verlustleistung einer typischen elektrischen Lokomotive mit zwei separat gesteuerten Antriebsanlagen

Das Wesentliche an der Erfindung ist darin zu sehen, daß die Verteilung der Antriebsausrüstung und die Mehrfachtraktion im Optimierungsproblem hinsichtlich der bei einem Fahrplan eines Fahrzeugs/Zuges eingeplanten Zeitreserven berücksichtigt wird. Dabei wird das Problem der Energieminimierung als mathematisches Optimierungsproblem formuliert und mit einem geeigneten, allgemein bekannten Optimierungsalgorithmus gelöst.

Geeignete Optimierungsalgorithmen sind beispielsweise aus Papageorgiou: Optimierung, Kapitel 10, 19 und insbes. 20, Oldenbourg Verlag, 1996 bekannt.

Es wird demnach davon ausgegangen, daß mehr als eine autarke Antriebsanlage zur Erbringung der gesamten Antriebsleistung eines Fahrzeuges/Zuges zur Verfügung steht. Beispielsweise verfügt eine typische elektrische Lokomotive üblicherweise über zwei Drehgestelle, von denen jedes mit separaten Antrieben ausgestattet ist. Bekannt sind weiterhin Konstruktionen mit drei Drehgestellen mit separaten Antrieben und drehgestellose Fahrzeuge mit zwei und mehr angetriebenen Achsen.

Bei Einfachtraktion, bei welcher nur ein Triebfahrzeug die Beförderung übernimmt, hängt die Anzahl der möglichen separaten und autarken Antriebsanlagen von der Schaltungstopographie des Triebfahrzeuges ab. Bei elektrischen Lokomotiven umfaßt die Schaltungstopographie beispielsweise neben den eigentlichen Antrieben (Motoren) hauptsächlich noch Komponenten der Hochspannungsausrüstung und Hilfsbetriebe, sogenannte Antriebskomponenten. Bei Mehrfachtraktion sind mindestens zwei Triebfahrzeuge im Zugverband an der Zugbeförderung beteiligt. Ebenso können mehrere konzentrierte oder verteilte Antriebseinheiten in einen Triebzug integriert sein. Auch hier entscheiden die Schaltungstopographie und die Zahl der im Zugverband gekuppelten Triebzüge über die Zahl möglicher separater und autarker Antriebsanlagen.

Erfindungsgemäß wird die Berücksichtigung von mehreren vollständig oder teilweise autarken Antriebsanlagen zur Energieminimierung hinsichtlich der bei einem Fahrplan eines Fahrzeugs/Zuges eingeplanten Zeitreserven vorgesehen, wobei jede der Antriebsanlagen mit gesonderten Funktionen des Wirkungsgrades oder der Verlustleistung charakterisiert sein kann. Bei der Einbeziehung der Verteilung der Antriebsausrüstung und der Mehrfachtraktion werden drei Vorgehensweisen vorgeschlagen, die einzeln oder kombiniert anwendbar sind.

Gemäß einer ersten Vorgehensweise werden die Funktionen des Wirkungsgrades oder der Verlustleistung der einzelnen autarken Antriebsanlagen in einer Vorverarbeitung zu einer Gesamtfunktion des Wirkungsgrades oder der Verlustleistung des Fahrzeuges/Zuges zusammengefaßt. Die weitere Optimierung ist nun identisch mit der Optimierung für eine konzentrierte Anlage, d. h. eine Anlage mit nur einer einzigen autarken Antriebsanlage.

Gemäß einer zweiten, nicht beanspruchten Vorgehensweise wird eine repräsentative Funktion (durchschnittliche Funktion) des Wirkungsgrades oder der Verlustleistung einer autarken Antriebsanlage zusammen mit der Anzahl der jeweils eingesetzten autarken Antriebsanlagen in der Optimierung berücksichtigt. Diese Vorgehensweise ist insbesondere sinnvoll, wenn Wirkungsgrad oder Verlustleistung der autarken Antriebsanlagen sich nicht zu sehr voneinander unterscheiden.

Gemäß einer dritten, nicht beanspruchten Vorgehensweise werden für jede autarke Antriebsanlage eine Funktion des Wirkungsgrades oder der Verlustleistung und die binäre Zustandsinformation AN bzw. AUS (d. h. Ein/Ausschaltung der einzelnen autarken Antriebsanlagen) in der Optimierung berücksichtigt. Diese Vorgehensweise ist insbesondere sinnvoll, wenn Wirkungsgrad oder Verlustleistung der autarken Antriebsanlagen in größerem Ausmaß unterschiedlich sind.

Während bei der dritten Vorgehensweise im Resultat der Optimierung bereits ein Einsatzplan für jede einzelne autarke Antriebsanlage vorliegt, muß dieser bei den ersten beiden Vorgehensweisen in einer Nachverarbeitung noch erstellt werden.

Durch die Berücksichtigung der Verteilung autarker Antriebsanlagen kann für jede Fahrsituation die optimale Kombination der einzelnen Antriebe ermittelt und vorausschauend eingestellt werden. Dabei werden Randbedingungen, wie zu erwartende Zug- und Bremskräfte, Kraftschlußbeiwert, Temperaturen in den Antriebskomponenten und zeitliche Einflüsse in der Antriebsdynamik berücksichtigt. Darüber hinaus können An- und Abschaltverluste unter gleichzeitiger Berücksichtigung der weiteren Verluste des Fahrzeuges minimiert werden.

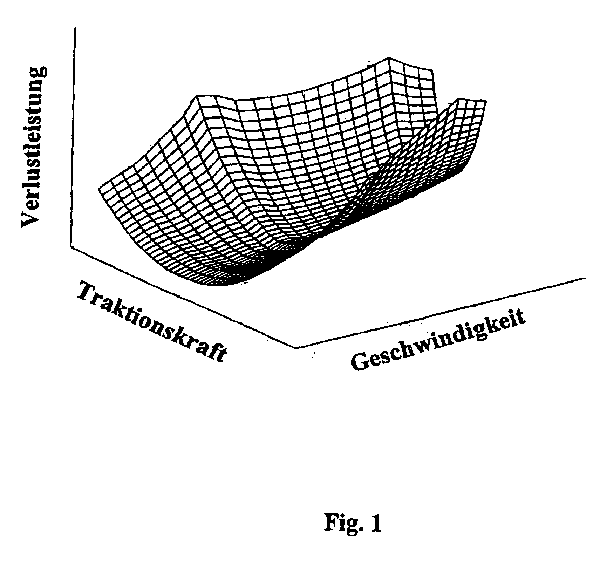

Fig. 1 zeigt ein Kennfeld der Verlustleistung in Abhängigkeit von der Traktionskraft und der Geschwindigkeit einer Antriebsanlage einer typischen elektrischen Lokomotive.

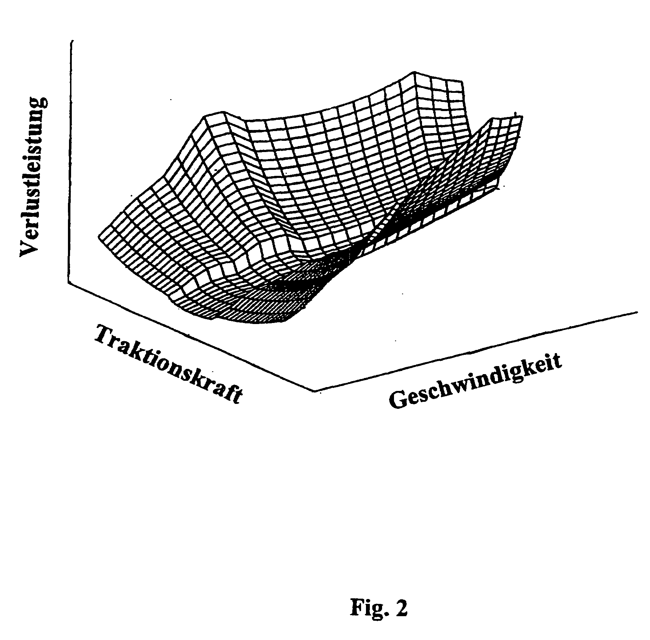

Fig. 2 zeigt ein entsprechend der ersten Vorgehensweise zusammengefaßtes Kennfeld der Verlustleistung (Gesamtfunktion) in Abhängigkeit von der Traktionskraft und der Geschwindigkeit einer typischen elektrischen Lokomotive einschließlich der Abschaltung einer autarken Antriebsanlage eines Drehgestells im unteren Leistungsbereich.

## Patentansprüche

1. Verfahren zur Energieoptimierung bei einem Fahrzeug/Zug bei der Benutzung von Zeitreserven, welche bei einem Fahrplan eingeplant sind, **dadurch gekennzeichnet, daß** zur Erzielung einer energiesparenden Fahrweise unter Zuhilfenahme eines Optimierungsalgorithmus das Vorhandensein von mehreren vollständig oder teilweise autarken Antriebsanlagen berücksichtigt wird, wobei die gesonderten Funktionen des Wirkungsgrades oder der Verlustleistung jeder Antriebsanlage beachtet werden,
daß die gesonderten Funktionen des Wirkungsgrades oder der Verlustleistung der einzelnen Antriebsanlagen in einer Vorverarbeitung zu einer Gesamtfunktion des Wirkungsgrades oder der Verlustleistung des Fahrzeuges/Zuges zusammengefaßt sind, wobei einer antarke Antriebsanlage eines Drehgestells im unteren Leistungsbereich abgeschaltet wird und daß die weitere Optimierung identisch mit der Optimierung für eine konzentrierte Anlage geschieht.

## Claims

1. A method for power optimization in a vehicle/train, using time reserves which are included when planning a schedule, **characterized in that**,
in order to achieve a power-saving travel mode with the aid of an optimization algorithm, the presence of a number of completely or partially autonomous drive systems is taken into account, whereby the separate functions of efficiency or power loss of each drive system are taken into consideration,
that the separate functions of efficiency or power loss of the individual drive systems are combined during pre-processing to form an overall function of the efficiency or power loss of the vehicle/train whereby an autonomous drive system of one bogie is switched off in the low power region,
and that the further optimisation takes place in an identical manner to the optimisation for a concentrated drive system.

## Revendications

1. Procédé pour l'optimisation de l'énergie dans un véhicule / train en utilisant les réserves de temps planifiées dans un horaire, **caractérisé**
**en ce que**, pour l'obtention d'un fonctionnement qui économise de l'énergie à l'aide d'un algorithme d'optimisation, on considère la présence de plusieurs systèmes moteurs totalement ou partiellement autarciques, en tenant compte des fonctions individuelles du rendement ou de la puissance perdue de chaque système moteur,
**en ce que** les fonctions individuelles du rendement ou de la puissance perdue des systèmes moteurs individuels dans un traitement préalable sont réunies dans une fonction d'ensemble du rendement ou de la puissance perdue du véhicule / train, en déconnectant un système moteur autarcique d'un boggie dans la région inférieure de puissance,
et **en ce que** l'optimisation ultérieure s'effectue de façon identique à celle de l'optimisation pour un système concentré.
